Europäisches Patentamt

**European Patent Office**

**Office européen des brevets**

(19)

(11) Numéro de publication: **0 123 572**
A1

(12) # DEMANDE DE BREVET EUROPEEN

(21) Numéro de dépôt: 84400488.7

(22) Date de dépôt: 09.03.84

(51) Int. Cl.³: **B 21 D 47/00**
A 42 B 3/02, B 32 B 3/12

(30) Priorité: 15.03.83 FR 8304226

(43) Date de publication de la demande:
31.10.84 Bulletin 84/44

(84) Etats contractants désignés:
AT BE CH DE FR GB IT LI LU NL SE

(71) Demandeur: Morin, Claude
Le Village Neuf 4
F-06530 Peymeinade(FR)

(71) Demandeur: IMMOLDING ESTABLISHMENT
P.O. Box 83
FL-94-90 Vaduz(LI)

(72) Inventeur: Morin, Claude
Le Village Neuf No 4
Peymeinade 06530(FR)

(74) Mandataire: Moncheny, Michel et al,
c/o Cabinet Lavoix 2 Place d'Estienne d'Orves
F-75441 Paris Cedex 09(FR)

(54) **Procédé de fabrication d'un élément à surface courbe à partir d'une planche rigide d'un matériau du type "nid d'abeilles" et produit obtenu.**

(57) On brise la rigidité d'une planche de matériau "nid d'abeilles" formé de bandes de métal, parallèles, soudées ensemble par points et écartés les unes des autres pour former des alvéoles réguliers, en faisant passer cette planche avec serrage entre plusieurs cylindres (3, 4, 5) à surface dure dont les axes parallèles sont disposés de manière à lui imprimer autant de changements de direction à peu près à angle droit afin de plisser, ou onduler, les parois des alvéoles à peu près parallèlement aux arêtes des sommets formés par les côtes de ceux-ci, on forme un sandwich en collant au moins une planche (6) ainsi traitée sur une feuille (9) d'un matériau thermoplastique, on chauffe le sandwich jusqu'à la température de ramollissement du matériau thermoplastique, on dispose le sandwich sur une forme ayant la courbure désirée et on le laisse refroidir.

./...

FIG.3A

1

Procédé de fabrication d'un élément à surface courbe
à partir d'une planche rigide d'un matériau du type
"nid d'abeilles" et produit obtenu".

La présente invention est relative aux casques de protection utilisés par exemple par les conducteurs de véhicules, notamment les pilotes d'automobiles de course, de motocyclettes, d'avions ou autres engins de sport, et les personnes travaillant dans des usines ou sur des chantiers, notamment du bâtiment et des travaux publics, ainsi que dans tous les autres cas où il est nécessaire de protéger la tête d'un utilisateur des chocs violents.

Ces casques sont habituellement constitués d'une coquille en une matière légère et dure telle que par exemple une matière plastique résistante aux chocs qui forme l'élément rigide dans lequel est fixée une garniture intérieure ou calotte souple et élastique d'amortissement qui est au contact de la tête de l'utilisateur.

La matière utilisée pour la coquille rigide est habituellement une matière plastique, thermoplastique, ou un tissu imprégné d'une résine synthétique. Les matières thermoplastiques sont actuellement préférées en raison du fait qu'elles permettent une fabrication industrielle permettant d'abaisser les coûts.

L'inconvénient de cette technique est la qualité très moyenne des produits obtenus et habituellement seuls des matériaux de rigidité très moyenne peuvent être utilisés dans de bonnes conditions de vieillissement. En conséquence, la calotte ou garniture d'amortissement classique réalisée principalement à partir de mousse de matière plastique ou d'élastomère ne constitue pas la solution idéale en vue d'obtenir les propriétés d'amortissement voulues du casque.

Le matériau connu sous la désignation de "nid d'abeilles", réalisé à partir d'un clinquant métallique, par exemple d'aluminium d'une épaisseur par exemple de l'ordre de 20 à 90 µ s'est révélé présenter des propriétés extrêmement intéressantes d'absorption d'énergie et donc d'amortissement tout en ayant un faible prix de revient.

Cependant ce matériau "nid d'abeilles", réalisé à partir de bandes de clinquant métallique, parallèles, soudées entre elles en des points décalés en quinconce et ensuite écartées les unes des autres pour former un matériau modulaire constitué d'une multitude d'alvéoles de forme hexagonale, s'il est extrêmement souple dans le sens de l'expansion perpendiculairement au plan des lames, présente une grande rigidité et une grande fragilité dans son plan.

Il n'a en conséquence pas été possible jusqu'à présent d'utiliser de manière industrielle un tel matériau en raison de la difficulté à le former en coquille hémisphérique.

L'invention a pour but de remédier à cet inconvénient en permettant de réaliser une calotte ou garniture intérieure d'amortissement en un matériau léger ayant d'excellentes propriétés d'absorption de l'énergie et pouvant suppléer aux défauts des matières utilisées pour la coquille et assurer en même temps une meilleure répartition et absorption des forces en cas de choc.

Elle a également pour but de permettre d'utiliser les propriétés d'un matériau en "nid d'abeilles" pour réaliser des calottes de garniture d'amortissement dans des casques de protection.

Cette invention a en conséquence pour objet un procédé de fabrication d'un élément à surface courbe partiellement sphérique au moyen dudit matériau "nid d'abeilles" métallique tel que défini ci-dessus, dans lequel on "brise" la rigidité d'une planche plane de "nid d'abeilles" en la forçant à passer avec serrage entre plusieurs rouleaux dont les axes parallèles sont disposés de manière à lui imprimer successivement plusieurs changements de direction a peu près à angle droit.

A la suite de ce traitement, les parois des alvéoles hexagonaux se trouvent plissées parallèlement à leur plan et transversalement à leur longueur, ce qui permet une déformation différentielle de ces parois, dont les plis peuvent s'étendre sur l'un de leurs bords tandis qu'ils se resserrent sur le bord opposé. On peut alors imprimer à la planche de matériau "nid d'abeilles" ainsi traitée une forme partiellement sphérique au moyen d'une empreinte présentant la surface courbe désirée.

L'invention a encore pour objet une garniture d'amortissement ou calotte intérieure pour casque de protection, caractérisée en ce qu'elle est constituée par un élément partiellement sphérique réalisé au moyen du procédé défini ci-dessus.

Les caractéristiques et avantages de l'invention apparaîtront au cours de la description qui va suivre, faite en se référant aux dessins annexés, donnés uniquement à titre d'exemple, dans lesquels :

- la figure 1 est une vue en perspective d'un fragment d'une planche d'un matériau "nid d'abeilles" formé à partir de clinquant d'aluminium;

- la figure 2 montre le même fragment de matériau "nid d'abeilles" après traitement suivant l'invention;

- les figures 3A et 3B montrent les différentes phases de traitement et de formage d'un matériau à absorption d'énergie pour la fabrication d'une calotte de garniture pour casque de protection suivant l'invention;

- les figures 4A et 4B montrent deux phases de la fabrication d'une calotte;

- la figure 5 montre schématiquement la formation de la calotte;

- la figure 6 est en vue de la phase finale de fabrication de la calotte suivant l'invention.

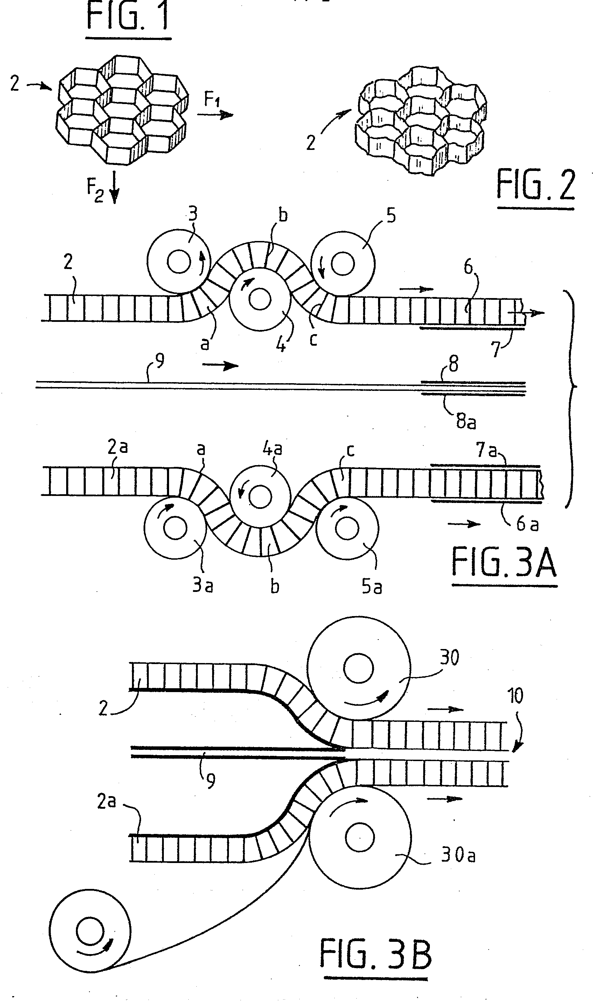

On a représenté à la figure 1 un fragment d'une planche de matériau "nid d'abeilles" formé de bandes d'un clinquant d'aluminium d'une épaisseur comprise entre 20 et 90 $\mu$ soudées entre elles par points en quinconces, les bandes étant ensuite étirées dans une direction perpendiculaire à leur plan. On obtient ainsi un matériau modulaire formé d'une multitude d'alvéoles hexagonaux.

On comprend que ce matériau présente une grande souplesse dans le sens latéral (flèches F, figure 1), les alvéoles étant libres de se déformer plus ou moins en largeur et en longueur, mais par contre résiste à toutes tentatives de déformation hors de son plan en raison du fait que les parois des alvéoles sont inextensibles.

Ce matériau présente cependant d'excellentes propriétés d'absorption d'énergie en raison de la faible épaisseur du clinquant qui le constitue et dont les lames, considérées individuellement, ne présentent qu'une faible résistance à l'écrasement sur chant, cette résistance étant toutefois considérablement multipliée par le fait que les bandes constituent des hexagones adjacents à parois communes. Ces propriétés sont bien connues dans la technique.

Pour pouvoir donner à une telle planche de matériau "nid d'abeilles" une forme partiellement sphérique, il est prévu suivant l'invention de briser sa rigidité en déformant les parois des alvéoles en les plissant dans leur plan, c'est-à-dire parallèlement aux sommets des angles des hexagones. Les parois de ces derniers peuvent alors être incurvées tout en restant dans leur plan, les plis formés sur l'un des bords de chaque lame pouvant s'ouvrir tandis que les plis formés sur le bord opposé peuvent se fermer.

La partie supérieure de la figure 3A montre comment, suivant l'invention, on peut obtenir ce résultat.

On fait passer une planche 2 de matériau "nid d'abeilles" formé comme indiqué ci-dessus entre trois rouleaux ou cylindres successifs 3, 4 et 5 à surface dure dont les axes sont parallèles mais disposés en quinconces de manière à imprimer à la planche 2 un premier changement de direction à peu près à 90° en a entre les cylindres 3 et 4, suivi d'un second changement de direction en b également à peu près à 90°, autour du cylindre 4 puis un dernier changement de direction en c entre les cylindres 4 et 5 pour reprendre sa direction initiale de déplacement, comme représenté en 6.

Au cours de ces trois changements de direction consécutifs, la planche 2 maintenue rigidement sous une légère pression entre les surfaces des cylindres se trouve contrainte de se déformer par plissement des lames qui la composent parallèlement aux arêtes des angles formés par les côtés des hexagones.

En effet, les lames sont contraintes de former des plis sur une partie de leur largeur adjacente au cylindre 3, ces plis s'ouvrant lors du passage autour du cylindre 4 tandis que d'autres plis se forment dans la partie de la planche adjacente à ce cylindre et l'inverse se produisant au franchissement du troisième cylindre 5.

De préférence après ce premier passage entre les cylindres successifs, la planche 2 est tournée de 90° dans son plan, autour de son axe central, et est réintroduite dans le jeu de cylindres 3, 4 et 5 qu'elle traverse ainsi dans le sens de la flèche F2 de la Figure 1 si le premier passage a été effectué dans le sens de la flèche F1, ou inversement. Elle subit donc à nouveau des contraintes dues aux trois changements successifs de direction.

Les lames constituant les côtés des alvéoles se trouvent ainsi ondulées ou plissées sur toute leur largeur à la sortie du dispositif, comme représenté à la Figure 2, donnant ainsi une possibilité d'allongement aux parois des alvéoles.

La planche assouplie peut alors être découpée en flans ayant la forme et les dimensions appropriées pour constituer les portions de sphère creuses désirées, par exemple une forme en étoile. Chaque flan est ensuite chauffé puis placé sur une forme partiellement sphérique où il se refroidit et prend la forme correspondante.

Il peut alors être enlevé et utilisé.

Pour former une calotte de garnissage d'un casque de protection, on utilise de préférence un matériau composite comprenant deux couches de matériau nid d'abeilles superposées.

On se référera maintenant aux Figures 3A et 3B pour décrire le procédé utilisé suivant l'invention pour former une telle calotte de garnissage d'un casque de protection.

Simultanément au passage de la planche 2 de matériau "nid d'abeilles" entre les cylindres 3, 4 et 5, on fait passer une seconde planche 2a dans le même sens entre des rouleaux 3a, 4a, 5a disposés d'une façon identique mais en sens opposé, afin d'obtenir deux planches sssouplies 6, 6a entre lesquelles on fait passer une feuille 9 d'une matière souple mince, par exemple une feuille d'une matière thermoplastique pouvant avoir une épaisseur comprise entre 5/10 et 20/10 et on applique simultanément une couche d'une colle à prise rapide, par exemple une colle néoprène en 7 et 7a sur les faces en regard des planches 6 et 6a de matériau "nid d'abeilles" et une couche 8, 8a d'une colle analogue sur la feuille de matière thermoplastique 9.

En se reportant à la fig. 3B, on fait passer les deux planches 6, 6a entre deux autres cylindres 30, 30a dont l'écartement correspond à l'épaisseur totale des deux planches 6, 6a et de la feuille 9 de matière thermoplastique, ces cylindres appliquant les deux planches l'une contre l'autre et les collant sur les faces opposées de la feuille 9. On obtient ainsi un sandwich 10 qui est formé de deux épaisseurs de matériau "nid d'abeilles" collées de part et d'autre d'une âme souple 9 en matière thermoplastique.

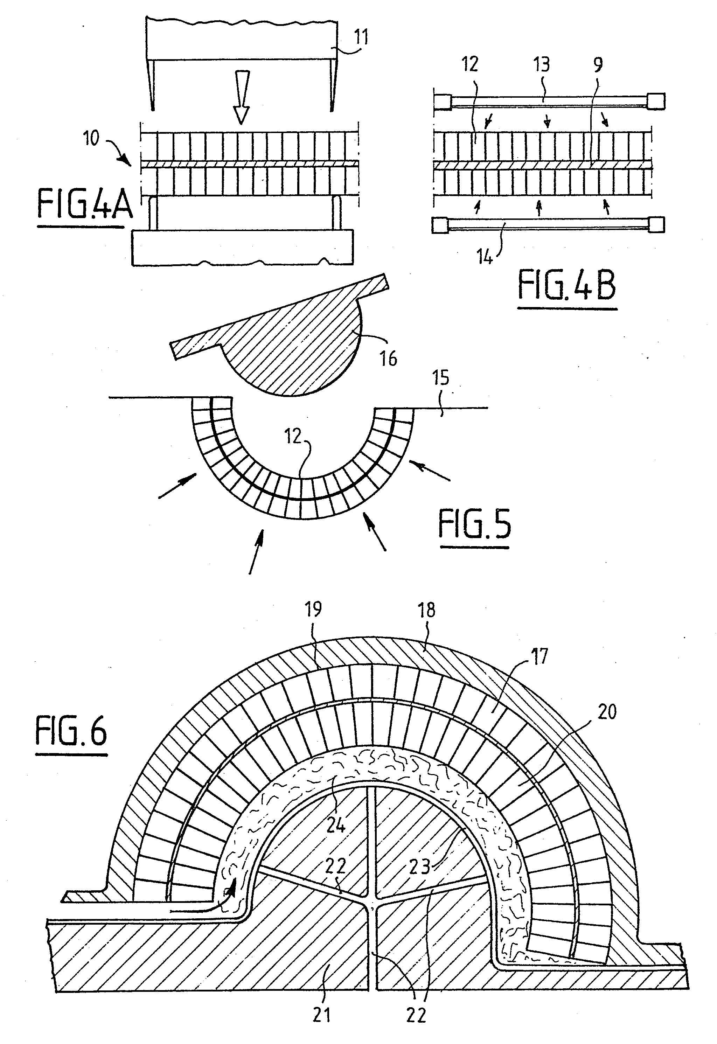

Ce matériau 10 relativement souple est ensuite découpé, comme représenté à la fig. 4A, au moyen d'une matrice 11, en portions, ou flans 12 appropriés pour constituer une calotte de casque de protection.

Ce flan présente, en plan, par exemple, une forme en étoile, d'une façon bien connue dans la technique, dont le découpage permet d'obtenir une surface régulière sans différences de densité.

Le flan 12 est ensuite chauffé entre des rampes chauffantes 13, 14 et la chaleur est immédiatement transmise par le clinquant d'aluminium constituant le matériau "nid d'abeilles" à la feuille 9 de matière thermoplastique qui se ramollit rapidement. A ce moment, on place le flan 12 dans une forme creuse 15 dans laquelle il subit une opération de formage au moyen d'une matrice 16, de façon connue dans la technique.

On laisse le flan refroidir dans la forme 15, puis on l'en extrait pour l'opération finale de la fabrication du casque qui consiste à placer la calotte 17 obtenue dans une coquille 18.

De préférence, pour ajouter une garniture de confort à l'intérieur du casque, une feuille 20 de polyuréthane est collée sur la surface interne de la calotte et l'ensemble est disposé sur une forme 21, traversée d'un réseau de conduits 22, sur laquelle a été préalablement disposée une feuille 23 d'un tissu étanche, et on injecte une mousse de polyuréthane entre la calotte 17 et la feuille 23, comme représenté en 24, la mousse ainsi formée assurant le confort du contact avec la tête de l'utilisateur. Simultanément, à l'introduction de la mousse, on applique une dépression par les conduits 22 et on referme le couvercle du moule pardessus la coquille 18.

On comprend que la feuille 20 de polyuréthane empêche la mousse de pénétrer à l'intérieur des alvéoles.

Le casque terminé est ensuite retiré du moule.

La calotte 17 formée d'un sandwich de matériaux "nid d'abeilles" à parois minces présente d'excellentes propriétés d'absorption d'énergie tout en étant légère et en outre le volume d'air emprisonné dans les alvéoles constitue un excellent isolant thermique conférant ainsi un avantage supplémentaire au casque réalisé suivant l'invention.

On remarquera que le matériau sandwich dont est constituée la calotte 17 peut être réalisé au moyen de deux planches de matériau "nid d'abeilles" ayant des épaisseurs et/ou des densités d'alvéoles différentes.

Bien entendu, la feuille 23 de tissu est d'une nature appropriée pour assurer un contact agréable et le maximum de confort à l'utilisateur.

R E V E N D I C A T I O N S

1 - Procédé de fabrication d'un élément à surface courbe en portion de sphère, à partir d'une planche rigide d'un matériau du type "nid d'abeilles" formé de minces bandes métalliques parallèles, soudées les unes aux autres par points décalés et étirées en les écartant les unes des autres pour former des alvéoles réguliers, caractérisé en ce qu'on brise la rigidité d'une planche plane dudit matériau en la forçant à passer entre plusieurs cylindres (3, 4 et 5) à surface dure dont les axes sont parallèles mais décalés de manière à lui imprimer autant de changements de direction à peu près à angle droit afin de plisser, ou onduler, les parois des alvéoles à peu près parallèlement aux arêtes des sommets formés par les côtés de ceux-ci, on chauffe la planche ainsi assouplie et on la dispose sur une forme au moins partiellement sphérique où elle refroidit en prenant la forme désirée.

2 - Procédé suivant la revendication 1, caractérisé en ce que pour briser la rigidité de la planche, on la fait passer deux fois entre les cylindres successifs, en la tournant de 90° dans son plan entre les deux passages.

3 - Procédé suivant l'une des revendications 1 et 2, caractérisé en ce que la planche assouplie (2) est découpée (en 12) selon une forme et des dimensions correspondant à la portion de sphère creuse désirée, avant d'être chauffée et enroulée.

4 - Procédé suivant l'une des revendications 1 à 3 caractérisé en ce qu'on forme un sandwich (10) en collant au moins une planche (6, 6a) ainsi traitée sur une feuille (9) d'un matériau thermoplastique, on chauffe le sandwich jusqu'à la température de ramollissement du matériau thermoplastique, on dispose le sandwich sur une forme ayant la courbure désirée et on le laisse refroidir.

5 - Procédé suivant l'une des revendications 1 à 4 caractérisé en ce qu'on fait passer simultanément deux planches (2, 2a) entre deux jeux de cylindres en quinconces inversées, on introduit une feuille en matière souple thermoplastique (9) entre les deux planches ainsi assouplies et on les colle les unes aux autres pour former un sandwich (10) qui est ensuite chauffé et conformé à la courbure désirée.

6 - Procédé suivant l'une des revendications 1 à 5 caractérisé en ce que chaque planche de matériau nid d'abeilles est en clinquant de métal ayant une épaisseur comprise entre 20 et 90 $\mu$.

7 - Casque de protection, du type comprenant une coquille en matière rigide dure et une calotte de garniture intérieure adaptée pour amortir les chocs, caractérisé en ce que la calotte de garniture selon l'une des revendications 1 à 6 qui est formée d'un matériau absorbant l'énergie, et réalisée à partir d'au moins une planche de matériau en "nid d'abeilles" (17,20) dont la rigidité a été brisée par passage entre des cylindres en quinconce, et qui a été chauffée et conformée sur une forme au moins partiellement sphérique avant d'être mise en place dans la coquille (18).

8 - Casque suivant la revendication 7 caractérisé en ce que la calotte de garnissage (17, 20) est revêtue sur sa surface interne d'une couche de matériau mousse (24), qui est isolée des alvéoles du nid d'abeilles par une feuille mince.

0123572

1 / 2

FIG. 1

FIG. 2

FIG. 3A

FIG. 3B

11

10

**FIG.4A**

12   13   9

14

**FIG.4B**

16

15

12

**FIG.5**

19   18

17

20

**FIG.6**

24

22   23

21   22

Office européen
des brevets

RAPPORT DE RECHERCHE EUROPEENNE

0123572
Numéro de la demande

EP 84 40 0488

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-3 670 393 (ALMOND)<br>* En entier *<br><br>--- | 1,4,6 | B 21 D 47/00<br>A 42 B 3/02<br>B 32 B 3/12 |
| A | FR-A-1 162 692 (PRICE)<br>* Page 13, lignes 53-58, 59-69; page 4, lignes 35-36; figures 35,43 *<br><br>--- | 1,2,4 | |
| A | FR-A-2 237 435 (FREMONT)<br>* Revendications 4,6; figures 5,6 *<br><br>--- | 1,4 | |
| A | FR-A-2 346 992 (MORIN)<br>* Revendications 1-3; page 1, lignes 21-28; page 2, lignes 16-22, 28-31; figure 1 *<br><br>--- | 4,6,8 | |
| A | FR-A-2 370 448 (MORIN)<br>* Page 2, lignes 5-12; figure 1 *<br><br>--- | 5,6 | **DOMAINES TECHNIQUES RECHERCHES (Int. Cl. 3)** |
| A | GB-A- 945 412<br>(CHRISTIE-MILLER)<br>* Page 1, lignes 53-61, 69-81; figure 1 *<br><br>--- | 6 | B 21 D<br>A 42 B<br>B 32 B |
| A | US-A-2 988 809 (HALL)<br>* Page 1, colonne 1, lignes 59-68; colonne 2, lignes 8-12; colonne 3, lignes 1-10; figures 2,5 *<br><br>---     -/- | 1,3,6 | |

Le présent rapport de recherche a été établi pour toutes les revendications

| Lieu de la recherche<br>LA HAYE | Date d'achèvement de la recherche<br>18-06-1984 | Examinateur<br>OFFMANN P.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 147 598 (NISSAN) | | |
| A | DE-B-1 197 841 (WICK) | | |
| A | FR-A-1 384 922 (HEXCEL) | | |

---

DOMAINES TECHNIQUES
RECHERCHES (Int. Cl. ³)

Le présent rapport de recherche a été établi pour toutes les revendications

| Lieu de la recherche LA HAYE | Date d'achèvement de la recherche 18-06-1984 | Examinateur OFFMANN P.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82